(19) Europäisches Patentamt
European Patent Office
Office européen des brevets

(11) **EP 4 625 983 A1**

(12) **EUROPEAN PATENT APPLICATION**

(43) Date of publication:
**01.10.2025 Bulletin 2025/40**

(21) Application number: **24305492.1**

(22) Date of filing: **29.03.2024**

(51) International Patent Classification (IPC):
*H04N 19/119* (2014.01)    *H04N 19/147* (2014.01)
*H04N 19/176* (2014.01)    *H04N 19/463* (2014.01)
*H04N 19/70* (2014.01)    *H04N 19/91* (2014.01)
*H04N 19/96* (2014.01)

(52) Cooperative Patent Classification (CPC):
H04N 19/70; H04N 19/119; H04N 19/147;
H04N 19/176; H04N 19/463; H04N 19/91;
H04N 19/96

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BORDES, Philippe**
**35890 LAILLE (FR)**

• **LE LEANNEC, Fabrice**
**35830 BETTON (FR)**
• **NASER, Karam**
**35250 MOUAZE (FR)**
• **REUZE, Kevin**
**35700 RENNES (FR)**
• **CHEN, Ya**
**35700 RENNES (FR)**

(74) Representative: **Interdigital**
**Immeuble ZEN 2**
**845 A, avenue des Champs Blancs**
**35510 Cesson-Sévigné (FR)**

(54) **TEMPORAL PREDICTION OF SPLIT MODE**

(57)    A method and an apparatus for encoding or decoding a video are provided wherein partitioning information for at least one first block of a reference image of a current image is stored and used for predicting a partitioning for at least one current block of the current image when encoding or decoding the current block. In some embodiments, the partitioning information comprises at least an information representative of a split mode splitting the at least one first block into smaller blocks and/or an information indicating a direction of split for splitting the at least one first block or from a splitting of a larger block that led to the first block.

1000

1010

Storing PI of reference image

1020

Encoding a block of the current image using PI

FIG. 10

EP 4 625 983 A1

**Description**

TECHNICAL FIELD

The present embodiments generally relate to video compression. The present embodiments relate to a method and an apparatus for encoding or decoding an image or a video. More particularly, the present embodiments relate to temporally predicting split mode for a block of video.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

SUMMARY

According to an aspect, a method for encoding a video is provided. The method comprises storing partitioning information for at least one first block of a reference image of a current image, the partitioning information comprising at least an information representative of split of the at least one first block into smaller blocks, and encoding at least one current block of the current image using a prediction of a partitioning for the at least one current block from at least one part of the stored partitioning information.

According to another aspect, an apparatus for encoding a video is provided. The apparatus comprises one or more processors operable to store partitioning information for at least one first block of a reference image of a current image, the partitioning information comprising at least an information representative of split of the at least one first block into smaller blocks, and encode at least one current block of the current image using a prediction of a partitioning for the at least one current block from at least one part of the stored partitioning information.

According to an aspect, a method for decoding a video is provided. The method comprises storing partitioning information for at least one first block of a reference image of a current image, the partitioning information comprising at least an information representative of split of the at least one first block into smaller blocks, and decoding at least one current block of the current image using a prediction of a partitioning for the at least one current block from at least one part of the stored partitioning information.

According to another aspect, an apparatus for decoding a video is provided. The apparatus comprises one or more processors operable to store partitioning information for at least one first block of a reference image of a current image, the partitioning information comprising at least an information representative of split of the at least one first block into smaller blocks, and decode at least one current block of the current image using a prediction of a partitioning for the at least one current block from at least one part of the stored partitioning information.

According to an aspect, a method for encoding or decoding a video is provided. The method comprises storing partitioning information for at least one first block of a reference image of a current image, the partitioning information comprising at least an information representative of a direction of a split line partitioning the at least one first block into smaller blocks or used for obtaining the at least one first block from a larger block, and encoding or decoding at least one current block of the current image using a prediction of a partitioning for the at least one current block from at least one part of the stored partitioning information.

According to another aspect, an apparatus for encoding or decoding an image or a video is provided. The apparatus comprises one or more processors operable to store partitioning information for at least one first block of a reference image of a current image, the partitioning information comprising at least an information representative of a direction of a split line partitioning the at least one first block into smaller blocks or used for obtaining the at least one first block from a larger block, and encode or decode at least one current block of the current image using a prediction of a partitioning for the at least one current block from at least one part of the stored partitioning information.

The above mentioned aspects can be used alone or in combination. Further variants and embodiments of the above mentioned aspects are presented in the document.

One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein.

One or more embodiments also provide a computer readable storage medium having stored thereon a bitstream generated according to the methods described herein.

One or more embodiments also provide a method and apparatus for transmitting or receiving the bitstream generated according to the methods described above.

According to an aspect, a device is provided that comprises an apparatus for decoding a video according to any one of the embodiments described above; and at least one of (i) an antenna configured to receive or transmit a signal, the signal including data representative of the video, (ii) a band limiter configured to limit the signal to a band of frequencies that includes the data representative of the video, or (iii) a display configured to display the video.

In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG.4 illustrates examples of different partition types in VVC and ECM.

FIG. 5 illustrates an example of recursive signaling of partitions.

FIG. 6 illustrates an example of geometric split line description.

FIG.7 illustrates an example of intra sub-partition depending on the block size.

FIG. 8 illustrates an example sub-block transform.

FIG. 9 illustrates an example of sub-block temporal motion vector prediction.

FIG. 10 illustrates an example of a method for encoding a video according to an embodiment.

FIG. 11 illustrates an example of a method for decoding a video according to an embodiment.

FIG. 12 illustrates an example of a method for determining partitioning information for a block of a reference image.

FIG. 13 illustrates an example of a method for encoding or decoding a partitioning for a block of a current image using partitioning information from a reference image, according to an embodiment.

FIG. 14 illustrates an example of a method for encoding or decoding a partitioning for a block of a current image using partitioning information from a reference image, according to another embodiment.

FIG. 15 illustrates an example of selection of a temporal area in the partitioning information buffer of a reference picture used by a current block.

FIG. 16 shows two remote devices communicating over a communication network in accordance with an example of the present principles.

FIG. 17 shows the syntax of a signal in accordance with an example of the present principles.

FIG. 18 illustrates an example of stored QT depth and MTT depth in a PI buffer for the CTU (440) shown in FIG. 4

FIG. 19 illustrates an example of a compound depth determined according to an embodiment for for the CTU (440) shown in FIG. 4.

FIG. 20 illustrates an example of a vertical compound depth and horizontal compound depth determined according to an embodiment for for the CTU (440) shown in FIG. 4.

FIG. 21 illustrates an example of stored QT depth and MTT depth and index values in a PI buffer for the CTU (440) shown in FIG. 4 according to an embodiment.

FIG. 22 illustrates an example of stored QT depth and MTT depth in a PI buffer for the CTU (440) shown in FIG. 4 according to an embodiment.

DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

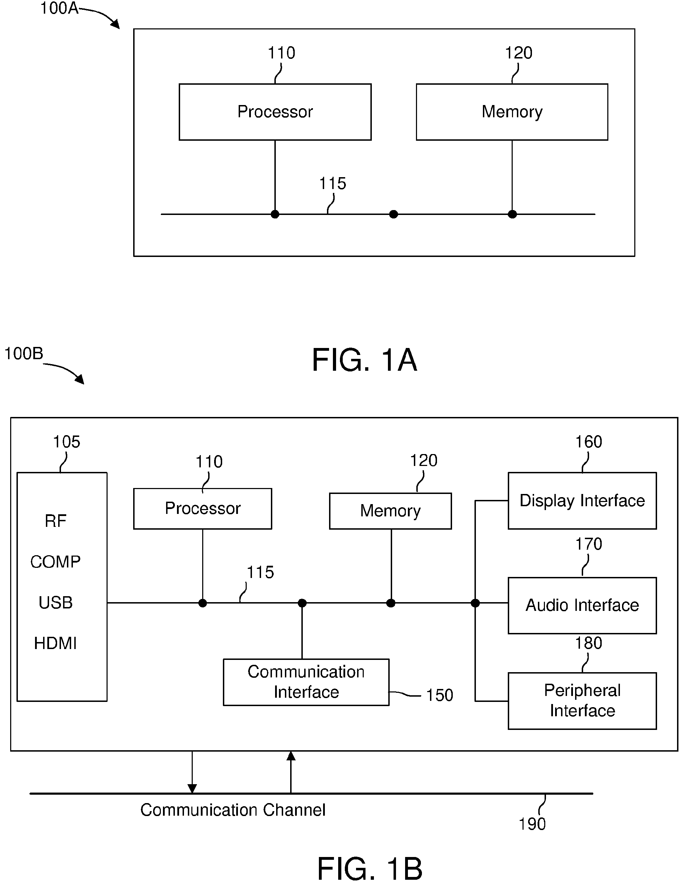

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

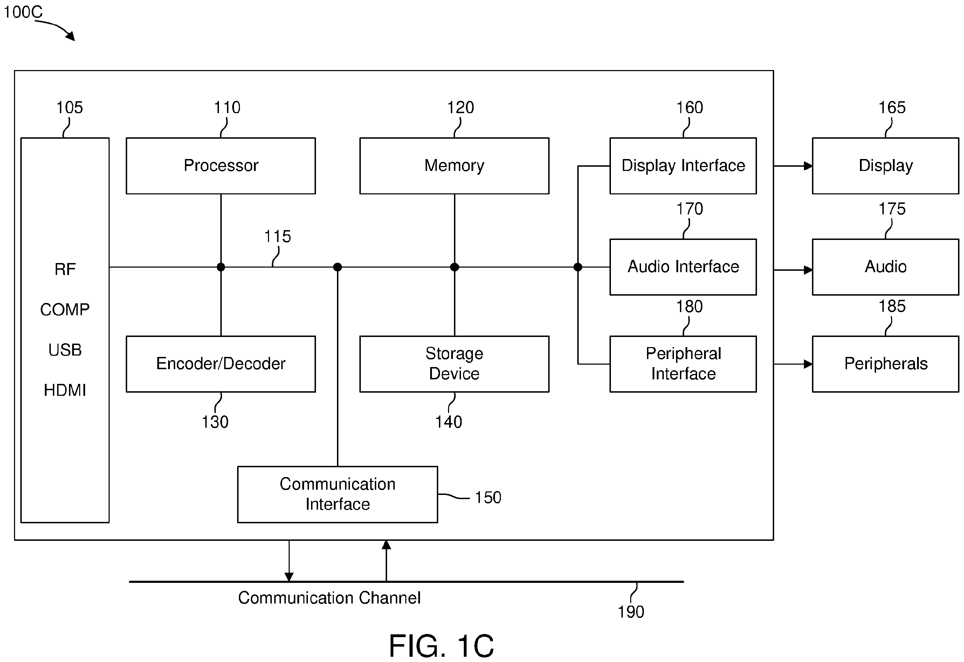

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentioned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

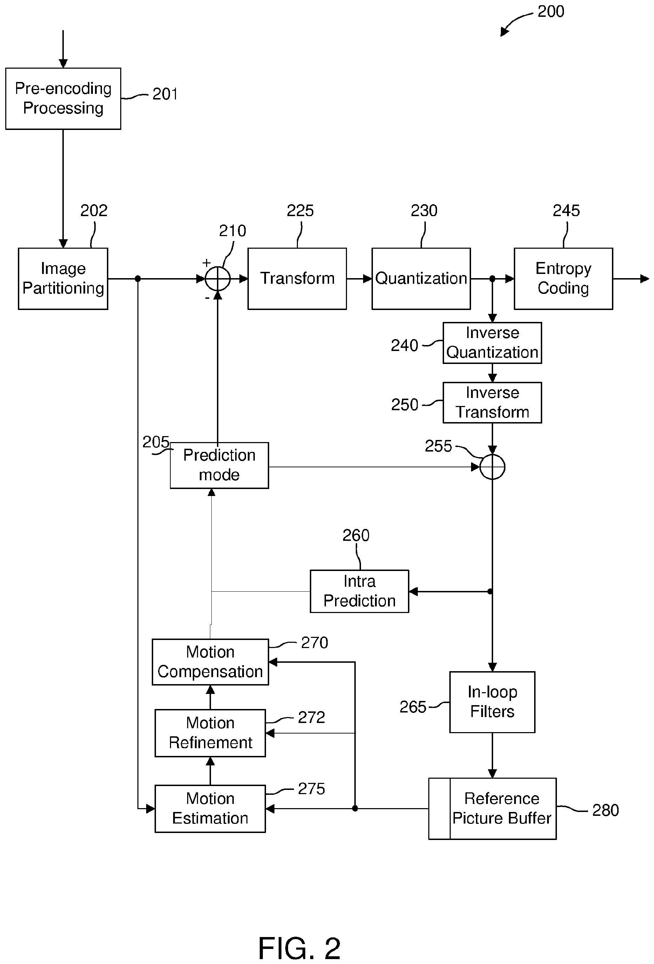

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (*Versatile Video Coding, Standard ITU-T H.266, ISO/IEC 23090-3, 2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

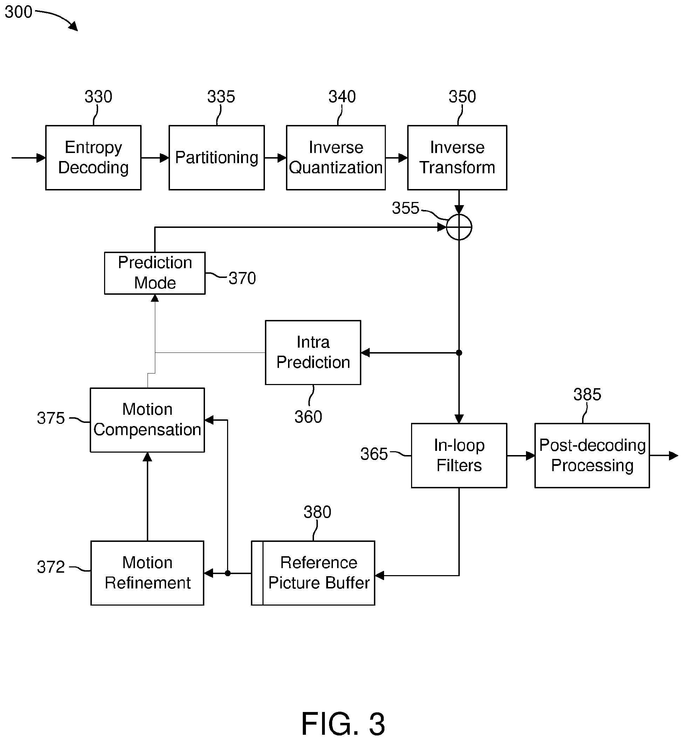

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to encoding or decoding a video wherein partitioning of blocks in an image of the video is temporally predicted using partitioning information from a reference image of the image. In some embodiments described herein, partitioning information from the reference image comprises not only partitioning tree information but also sub coding units partitioning information. In some embodiments described herein, predicting partitioning data comprises at least one of adding constraints on partitioning decisions based on the partitioning information of the reference image, encoding or decoding the partitioning data based on the partitioning information of the reference image.

Embodiments described herein can be implemented for instance in a partitioning module of a video encoder or a video decoder, or in a module that determines a prediction mode or in an entropy encoder/decoder module. For instance, the embodiments described herein can be implemented in the image partitioning module 202, prediction mode module 205, intra prediction module 260 or entropy coding module 245, of the video encoder 200 in FIG. 2 or in the partitioning module 335, , intra prediction module 360, prediction mode module 370, or entropy decoder 330 of the video decoder 300 in FIG. 3.

Partitions in VVC and ECM

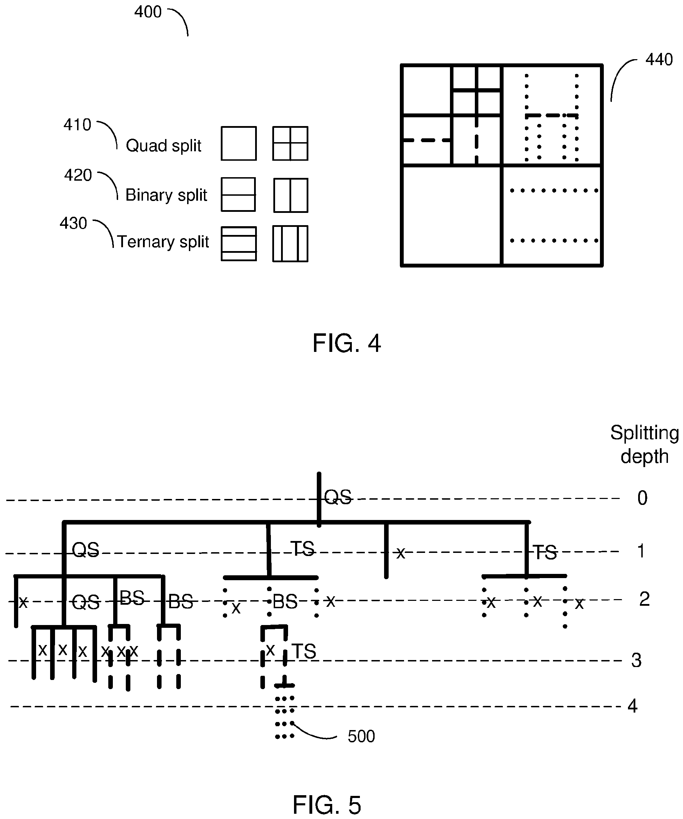

In VVC *(Versatile Video Coding (VVC), ITU-T H.266 (ex H. VVC) | ISO/IEC 23090-3, 08/2020)* and ECM (M. Coban, R.-L. Liao, K. Naser, J. Ström, L. Zhang, "Algorithm description of Enhanced Compression Model 10 (ECM 10), " document JVET-AE2025, 32nd Meeting, Hannover, DE, 13 20 October 2023)*, a picture is first partitioned into coding tree units (CTU). Next each CTU may be partitioned into coding units (CU) using recursive signaling. As illustrated on FIG. 4, there exist 3 types of partitions of a CTU: quad tree (QT) split (410), binary tree (BT) split (420) and ternary tree (TT) split (430). The 2 last types (binary split, ternary split) may be horizontal or vertical. In the following, BT and TT may be indiscriminately grouped as multiple type tree (MTT).

An example of a recursive signaling is depicted in FIG. 5 for a current CTU (440) shown in FIG. 4 where QS, TS, BS and x represents the signaling of quad tree split (or quad split), ternary tree split (or ternary split), binary tree split (or binary split) and no-split respectively. VVC and ECM also signals the minimum and maximum splitting depth allowed for each type of partition at a sequence level. For example, if the minimum and maximum splitting depth of ternary split is 1 and 3 respectively, then TS cannot be signaled at the splitting depth 0 or superior to 3. In the example depicted in FIG. 5, the maximum splitting depth is 4 for all types, then the no-split flag (at 500 in FIG. 5) is not signaled if the splitting depth has reached 4.

In VVC, a syntax element, split_cu_flag, is signaled or inferred at each coding tree node. If split_cu_flag is 0, a coding tree leaf is reached, and this coding tree node is treated as a CU; otherwise, a syntax element, split_qt_flag, is signaled or inferred to select between the QT split and the MTT split. If split_qt_flag is equal to 1, then the QT split is applied; otherwise, a syntax element, mtt_split_cu_vertical_flag, is signaled or inferred to select between the horizontal split direction and the vertical split direction; and a syntax element, mtt_split_cu_binary_flag, is signaled or inferred to choose between the BT split and the TT split. When signaling syntax elements related to the coding tree, some additional conditions allow to reduce signaling redundancy. For example, if split_qt_flag is 0 for a CU of size not larger than the maxiumum CU size for the BT split but larger than the maximum CU size for the TT split, mtt_split_cu_binary_flag is not signaled and inferred to be 1. Another case is related to inferring these four coding tree split information flags depending on syntax elements in either SPS or picture header (PH). For example, the maximum allowed CU size for BT split and the maximum allowed CU size for the TT split can be derived from the related parameters in either SPS or PH. Besides decreasing syntax redundancy using SPS and PH syntax elements, syntax redundancy between BT and TT is also reduced in VVC by removing redundant partitioning patterns using syntax constraints.

The abovementioned four syntax elements are all context coded by the context-based adaptive binary arithmetic coding (CABAC). It is expected that the partitioning decisions for a coding tree node may be closely related to the partitioning structures of the current and neighboring coding tree nodes. Therefore, in VVC, 9, 6, 5, and 4 context variables are assigned respectively for entropy coding split_cu__flag, split_qt_flag, mtt_split_cu_vertical_flag, and mtt_splitcu_binary_flag. To derive the context index increment, ctxInc for a current CB, information (width, height, QT depth of spatial neighboring CB above and left of the current CB are used.

Temporal partitioning prediction

Storage of coding info

The video codec stores some reconstructed pictures into a decoded picture buffer (DPB), such as the reference picture buffer 280 and 380 in μIG. 2 and FIG. 3. The pictures in the DPB may be used as reference for building the inter-predictions.

In VVC and ECM, additional decoded information may be stored for each reference picture such as the coding mode (intra or inter) and intra prediction mode in the IPM buffer, the motion information (motion vectors and reference indexes) into the MI buffer.

In G. Laroche, P. Onno, "AhG12: On ECM Temporal partitioning prediction, " document JVET AG0126, 33rd Meeting, by teleconference, 17 26 January 2024, the additional information also includes the partition information (PI) QT depth and MTT depth which are stored at center position of each block aligned to a 16x16 grid in order to reduce the memory needed to store these variables.

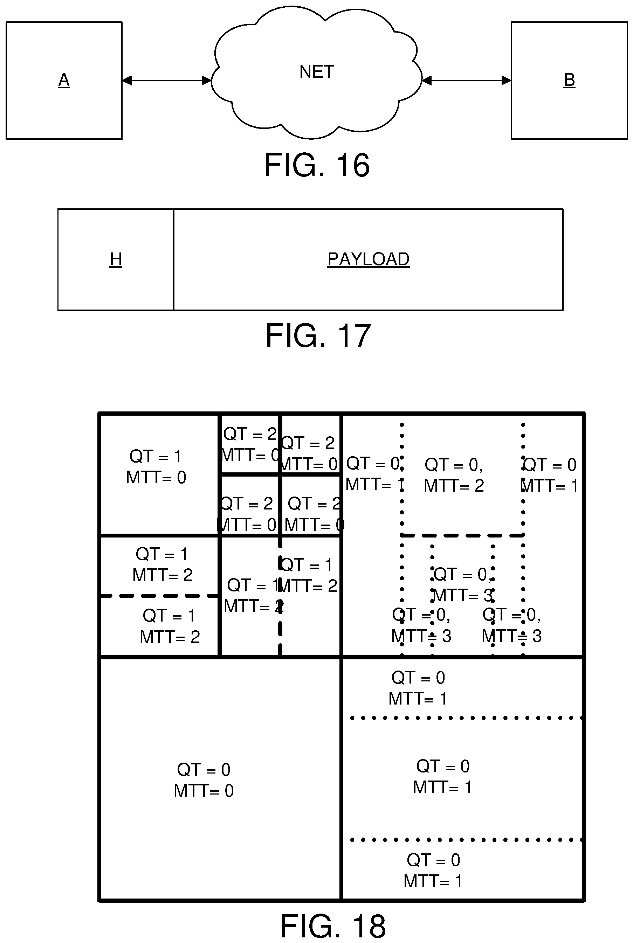

An example of stored QT depth and MTT depth for the CTU (440) depicted on FIG. 4 is shown in FIG. 18.

Temporal partitioning prediction

In *JVET AG0126,* the stored partition information is used to derive the following variables:

- The minimum temporal QT Depth

- The average temporal QT Depth

- The maximum temporal MTT depth

- The average temporal MTT depth

These variables are derived from a temporal area. The temporal area is a collocated area from the same reference frame used for the temporal motion predictors (co-located reference picture).

The collocated area of the current block is equal to the CTU size. The collocated area is centered according to the center of the current block of a picture to encode or decode. Inside this collocated area, each 16x16 cell on the grid of the co-located reference picture is considered to determine these 4 variables. These variables allow to constraint or reduce the signaling of the split modes (QT, BT, TT) for the current block. When the current QT depth is strictly inferior to the temporal minimum QT depth minus 1, only the QT split is allowed. When the current QT depth is strictly inferior to the temporal average QT depth minus 1, No split, QT split and TT splits are allowed and BT splits are allowed if a TT split has been selected in a parent node.

The 4 variables can also be used to locally adjust the maximum MTT depth. The value of maximum MTT depth is incremented when the current QT depth is equal to average temporal QT depth minus 1, and the maximum temporal MTT depth is superior to the maximum MTT depth of the current frame, and the temporal average of maximum MTT depth is equal to the half of the picture header maximum MTT depth of the reference frame, and if the reference frame is not an Intra reference frame, or when the current QT depth is equal to the average temporal QT depth, and the temporal maximum MTT depth is superior to the maximum MTT depth of the current frame, and the temporal average of MTT depths is superior or equal to the half of the picture header maximum MTT depth of the reference frame.

The value of maximum MTT depth is decremented when the maximum QT depth of the current frame is superior to the maximum MTT depth and when the maximum temporal MTT depth is equal to the maximum MTT depth of the current frame, and when the average temporal QT depth is inferior to the QT depth of the current frame, or if the maximum temporal MTT depth is strictly inferior to the maximum multi-tree depth of the current node.

The 4 variables can also be used to adapt the split syntax elements order. When the current QT depth is strictly inferior to the average temporal QT depth, the syntax elements (split_cu_flag, split_qt_flag) signaling if the coding unit is split and if the split is a quad-tree split respectively are coded in this order, otherwise the syntax elements are coded in the order (split_qt_flag, split_cu_flag).

Some coding modes of a CU also provides for CU partitioning (e.g. GPM, ISP, SBT), that provides splitting of the CU into subCUs.

Geometry partition mode (GPM)

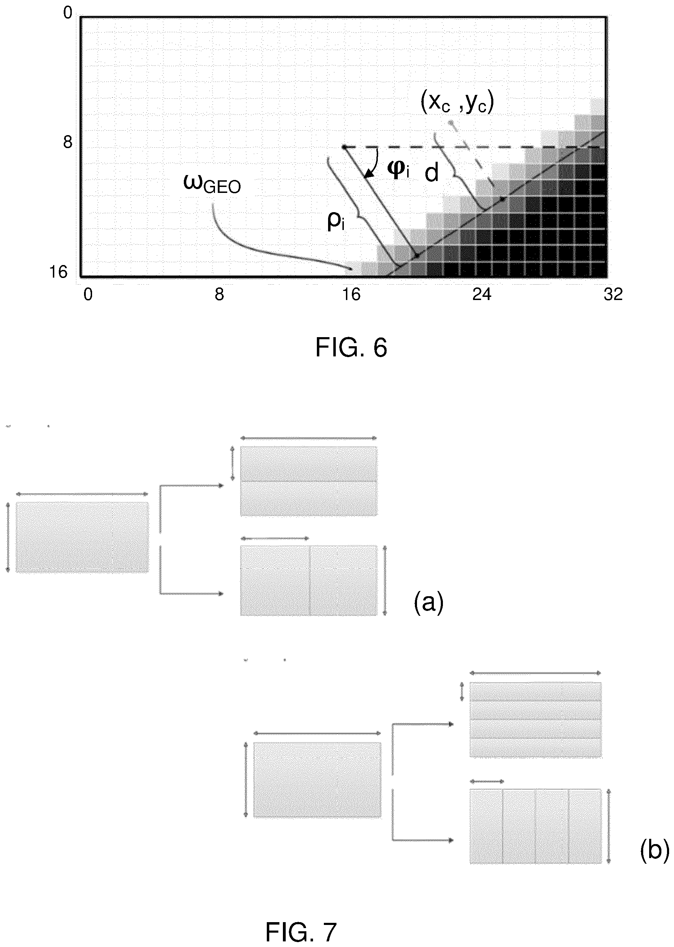

In VVC, a geometric partitioning mode is supported for inter prediction. The geometric partitioning mode is signaled using a CU-level flag as one kind of merge mode, with other merge modes. When this mode is used, a CU is split into two parts or partitions by a geometrically located straight line. The location of the splitting line is mathematically derived from the angle and offset parameters of a specific partition, as illustrated on FIG. 6. The angle $\varphi_i$ is quantized from between 0 and 360 degrees with a step equal to 11.25 degree (total 32). The description of a geometric split with angle $\varphi_i$ and distance $\rho_i$ is depicted in FIG. 6.

Each part of a geometric partition in the CU is inter-predicted using its own motion or intra predicted. In VVC, uni-prediction only is allowed for each partition whereas bi-prediction, intra prediction and affine prediction are also allowed in ECM. Each inter part has motion vector(s) and reference index(es).

Intra sub-partition (ISP).

With ISP on luma, a luma intra-predicted block is split vertically or horizontally into 2 or 4 sub-partitions depending on the block size. In ECM, one syntax element (*ispMode*) is coded with value equal to 0 or 1 (horizontal or vertical sub-partition). FIG. 7 shows examples of the possibilities of sub-partitions for $4\times8$ and $8\times4$ CUs (a) and for CUs larger than $4\times8$ or $8\times4$ (b). Each partition is predicted with same intra mode, but they can use the reconstructed samples of the top or left sub-partition.

Sub block transform (SBT).

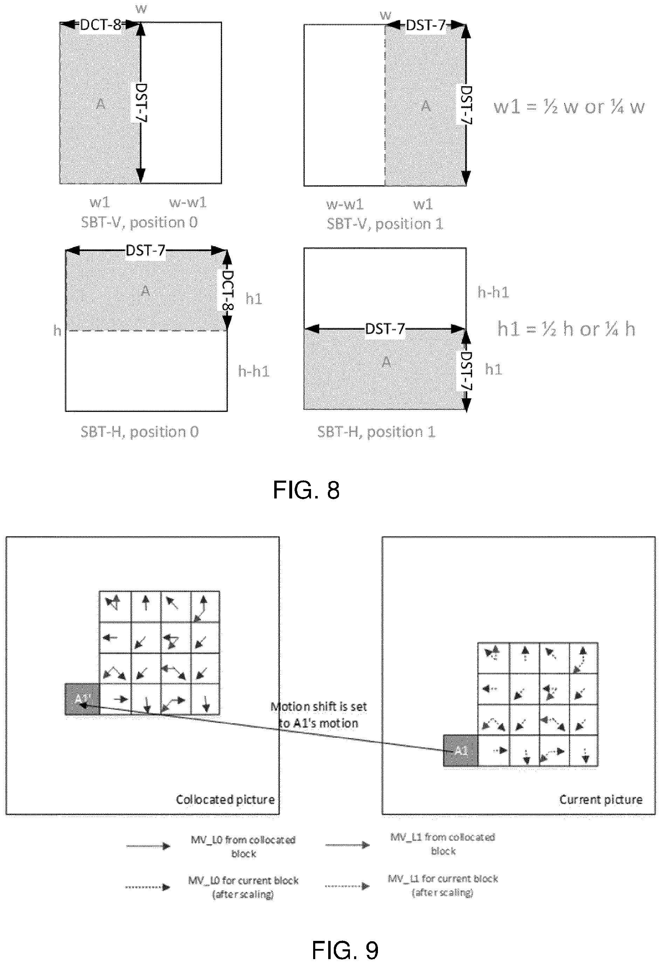

In VVC and ECM, when using the SBT transform mode, the residuals may be divided in two parts and only one part is transformed and coded, while the other residuals part is zeroed out as described in J. Park, B. Jeon, " Non-CE6 : Simplified SBT mode coding, » document JVET-P0216, 16th Meeting: Geneva, CH, 1-11 October 2019 and depicted in FIG. 8 for transform unit of 1/2 size of the current coding unit.

The coded part size may be 1/2 size or 1/4 size of the current coding unit. It is signaled by four flags as below:

**cu_sbt flag** equal to 1 specifies that for the current coding unit, subblock transform is used. Its value being 0 specifies that for the current coding unit, subblock transform is not used.

**cu_sbt_quad_flag** equal to 1 specifies that for the current coding unit, the subblock transform includes a transform unit of 1/4 size of the current coding unit. **cu_sbt_quad_flag** equal to 0 specifies that for the current coding unit the subblock transform includes a transform unit of 1/2 size of the current coding unit.

**cu_sbt_horizontal_flag** equal to 1 specifies that the current coding unit is split horizontally into 2 transform units. cu_sbt_horizontal_flag equal to 0 specifies that the current coding unit is split vertically into 2 transform units.

**cu_sbt_pos_flag** equal to 1 specifies that the tu_cbf_luma, tu_cbf_cb and tu_cbf_cr of the first transform unit in the current coding unit are not present in the bitstream. cu sbt_pos flag equal to 0 specifies that the tu_cbf_luma, tu_cbf_cb and tu_cbf_cr of the second transform unit in the current coding unit are not present in the bitstream.

Sub-block Temporal Motion Vector Prediction (SbTMVP).

The inter-prediction may build the motion candidates from the reconstructed spatial neighbors, the history motion vectors buffer or from the co-located position in the MI buffer of the co-located picture. In a variant, the displaced block (displacement derived from the MV (motion vector) of one neighboring reconstructed CU, see A1 in FIG. 9) in the MI buffer may be used. The MI buffer storage contains block-aligned 4x4 motion information (MVs and reference indexes). In case the current block is larger than 4x4, the sub-block motion vectors may be used to predict the current prediction as depicted in FIG. 9.

In ECM, the SbTMVP vectors may be picked up from two different co-located reference pictures and several displaced blocks.

Some embodiments described herein provides a method for encoding or decoding a video that uses temporal partition prediction wherein information from the partitioning tree of the reference image is used but also sub-CU or CU-based partitioning information.

It is proposed to enhance/improve the temporal partition prediction and CU-based partition mode prediction by storing additional information. Some embodiments comprise storing CU and sub-CU splits line partition info (PI), and/or splitting type and depth and using CU-based split partition (such as the one provided by the coding modes GPM, ISP, SBT) for temporal partition prediction of the tree partitioning. In the document, tree partitioning relates to split modes applied to a CTU to obtain a given CU or block of a current image to encode or decode, while CU-based partitioning relates to the split modes applied to the CU that split the CU into multiple sub-CU or blocks.

In some embodiments, the stored PI are also used to predict sub-CU partition, for example GPM splitting. Some variants extend the temporal storing/propagation to predict the coding partition of transform-tree type or the prediction unit type.

Some embodiments provide for storing a depth information or a CU partition that allows to derive the CU size directly.

Storage of CU-based splitting information and sub-CU splits line partition information

In this embodiment, it is provided to store the CU splitting information and eventually sub-CU splits line partition information into the partition information (PI) buffer. In this embodiment, it is provided to store information indicating that the CU has been further split into sub-units.

In another embodiment, it is provided to store an information indicating a direction of the splits. More particularly, in these variants, the QT depth and MTT depth determined for a CU of the reference image stored in the PI buffer are enriched by one or more data indicating a direction of a split line partitioning the CU into smaller blocks (sub-CUs) or used for obtaining the CU from a larger block (CTU).

In a further embodiment, the two above embodiments can be combined to provide the two indications, either as separate index values or in a combined index as described below.

The partitioning information of the CUs of the reference image are stored in the PI buffer of the reference image using a grid resolution (cell size) that can be larger than one sample, such as 4x4, 8x8 or 16x16 for example. Each cell is assigned with the partitioning information determined for the CU that contains the cell.

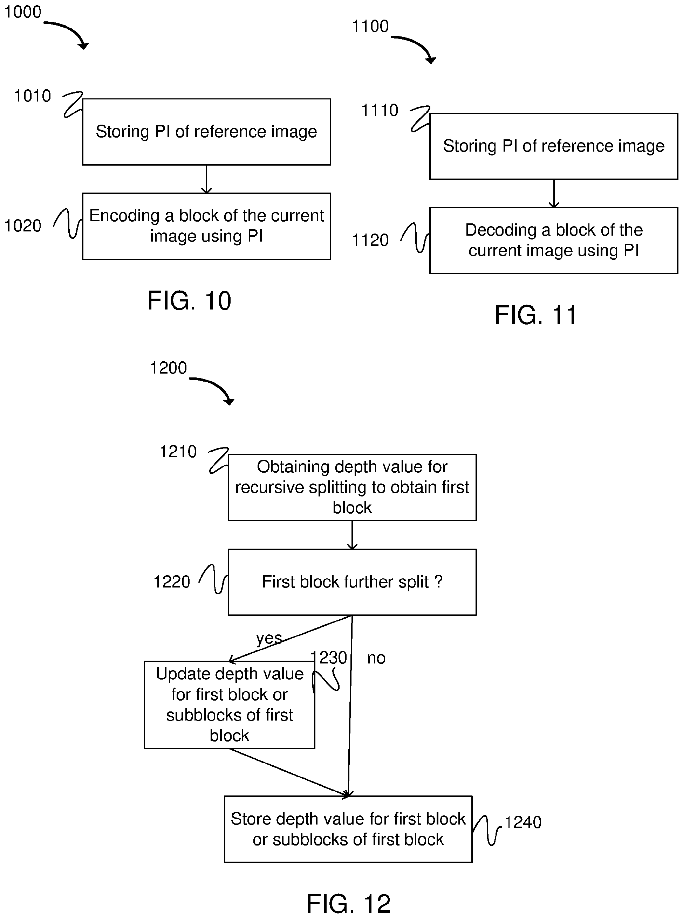

The indication that the CU has been further split can be stored using the QT depth or MTT depth by incrementing these values depending on the further split applied to the CU as is described with FIG. 12 below or using a specific index value indicating the further split.

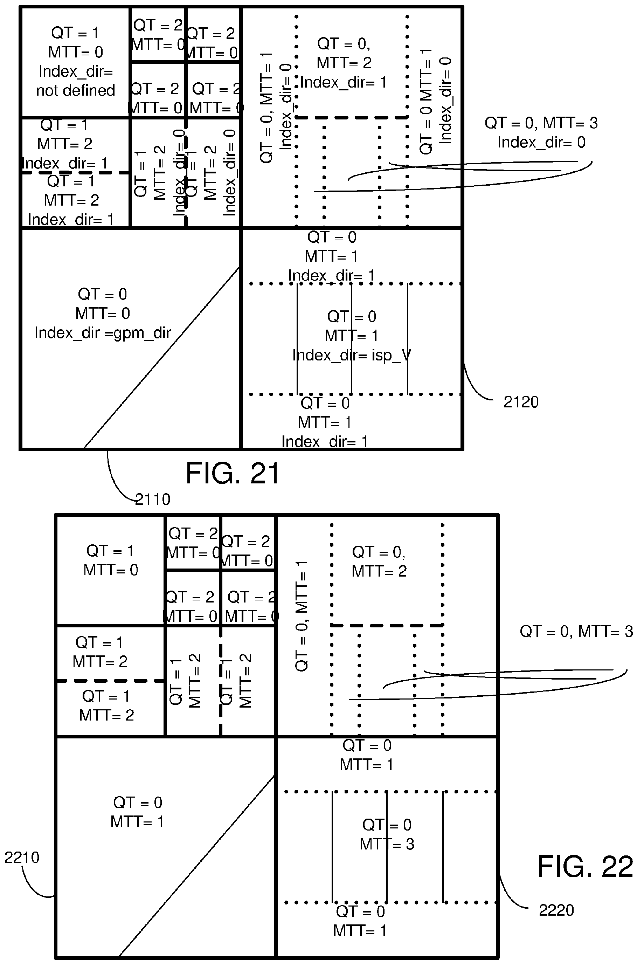

In a variant, the partitioning information stored in the PI buffer can comprise an index value indicating the direction of split. For example, the direction of split can correspond to vertical (ex: 0), horizontal (ex: 1) and eventually several other values (ex: >1) for other splitting such as the GPM non-vertical and non-horizontal splitting lines. FIG. 21 illustrates an example of the index value (index_dir) assigned to CU obtained from the splitting of the CTU (440) of FIG. 4. For example, the index value indicates the last direction of CTU splitting.

In a further variant, the index value can also comprise an indication of a direction of split for CU-based partitioning. For example, as shown in FIG. 21, the CU 2110 is encoded using geometric partitioning mode, and the index value for the direction is set to a value (gpm_dir) indicating the split line in the GPM mode. As another example shown in FIG. 21, the CU 2120 resulting from a TT split is further encoded using ISP, the index value for the direction assigned to this CU is set to (isp_V) value indication a vertical ISP.

The index values can also indicate whether the current cell contains split or not, and the type of split. The index value indicating the direction of split can be stored in the PI buffer in association with the MTT depth.

In another variant, the partitioning information stored in the PI buffer can also include CTU (depth) partitioning and consist in a split series indicator at cell level (typically a cell can be 4x4 samples but other resolution can be used). That is, each cell of the PI buffer may be assigned a value which may be computed as a concatenated binary mask of all split modes that led to the CU containing the considered cell. Assuming the series of splitting operation leading to that CU is noted {split [i], i=0,..,N-1}, the corresponding split series value is computed as:

$$splitSeries = \sum_{depth} splitMode[depth] \ll (depth \times n_b)$$

Where:

The array splitMode[.] represents the set of split modes that led to the considered CU. It is available both at encoder and decoder sides, and depth goes from 0 to the depth of the considered CU, $n_b$ is the number of bits to represent a split mode in memory. It may be equal to 5 for example.

This way, by comparing the respective *splitSeries* values of 2 neighboring 4x4 blocks, the encoder and decoder are able to determine if the two 4x4 blocks belong to a same CU or not, hence if a split line exists between them, as well as a direction (horizontal or vertical) of the split line.

In a further alternative of this *splitSeries* information stored in the PI buffer, some split modes dedicated to identifying sub-CU split modes may be used. That is, some specific values of *splitMode[depth]* in the above equation may indicate the GPM split mode, the ISP split mode, the SBT split mode, or some motion partitioning mode like SbTMVP.

Another embodiment provides for storing an alternative type of depth information in the temporal partitioning information buffer (PI buffer). The alternative types of partitioning information may be stored in the PI buffer and further used for temporal prediction of CU-based split data.

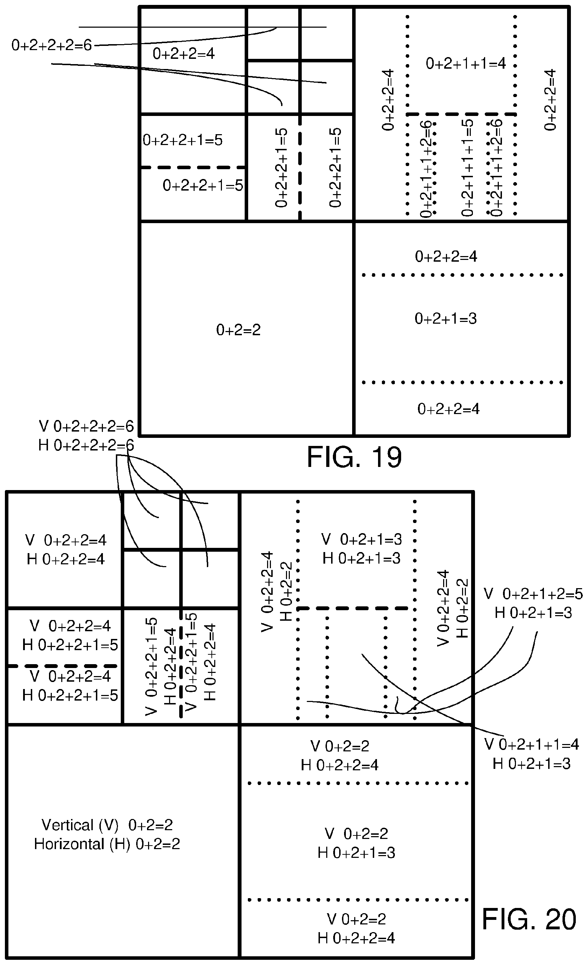

In a variant, a compound depth value is defined as follows. The compound depth is set to zero for the coding tree root, i.e. the coding tree node corresponding to the CTU. When a CU is split according to QT (quad-tree) split mode, the compound depth is incremented by 2 and assigned to children coding tree nodes. When a CU is split according to BT (binary-tree) split mode, the compound depth is incremented by 1 and assigned to children coding tree nodes. When a CU is split according to TT (ternary-tree) split mode, a compound depth incremented by 1 is assigned to the children coding tree node corresponding to middle subblock area of parent block area. Moreover, a compound depth incremented by 2 is assigned to the two children coding tree nodes corresponding to subblock areas of parent block area different from the middle sub-block. FIG. 19 illustrates the resulting compound depth obtained by applying this variant to the CTU (440) of FIG. 4.

It can be seen that an advantage of the compound depth is that the value of the compound depth determined for a CU is representative of the size of the CU, whereas the MTT depth is not always in bijection with the block size. That is, a same MTT depth value may be assigned to two CU with different sizes. As a consequence, the compound depth metric as defined above can be better adapted than the MTT depth value to perform temporal prediction of block split information and to predict the fact that a block is split or not in a current picture.

In a further variant, the compound depth metric can be computed not only for CU splits but also split inside a CU, i.e. through SBT, GPM, ISP modes. For instance, in case of ISP split, the compound depth is increment by one in case of split into 2 TUs, and by 2 in case of split into 4 TUs. In case of SBT split, the compound depth is increment by one in case of split into 2 TUs with same size. In case of asymmetric SBT split in two TUs with different sizes, the compound depth is increment by 1/2 and 3/2 , respectively for the bigger TU and the smaller TU. In case of GPM split in two motion partitions, the compound depth is increment by 1, for the 2 PUs.

In another variant, instead of storing and temporally propagating some depth information as described above, some block size information can be used. That is, the size of blocks in a given picture may be the information stored in the partitioning information temporal buffer. This may consist in storing the surface of the block.

In another variant, a compound depth value for each direction (horizontal and vertical) can be defined. For example, for a BT split horizontal, only the horizontal compound value is incremented by 1 and for a BT split vertical, only the vertical compound value is incremented by 1. For example, for a QT both the horizontal and vertical compound values are incremented by 2. For example, for a TT split horizontal, horizontal compound value of the children middle CU is incremented by 1 and horizontal compound value of the children CUs other than the middle CU is incremented by 2, while for a TT split vertical, vertical compound value of the children middle CU is incremented by 1 and vertical compound value of the children CUs other than the middle CU is incremented by 2. FIG. 20 illustrates the resulting horizontal (H) and vertical (V) compound depths obtained by applying this variant to the CTU (440) of FIG. 4.

The partitioning information mentioned in the embodiments/variants above can be stored in the PI buffer in addition to the QT depth and MTT depth or in replacement of these depth values.

FIG. 10 illustrates an example of a method 1000 for encoding a video according to this embodiment using any one of the variants mentioned above. At 1010, partitioning information for at least one first block of a reference image of a current image of the video is stored in the PI buffer wherein the partitioning information comprises at least an information representative of a split of the at least one first block into smaller blocks. The partitioning information corresponds to partitioning data used for encoding the at least one first block that are available both on the encoder and the decoder. The stored information comprises any of the information mentioned in the variants above.

At 1020, at least one current block of the current image is encoded using a prediction of a partitioning for the at least one current block from at least one part of the stored partitioning information.

FIG. 11 illustrates an example of a method 1110 for decoding a video according to this embodiment using any one of the variants mentioned above. At 1110, partitioning information for at least one first block of a reference image of a current image of the video is stored in the PI buffer wherein the partitioning information comprises at least an information representative of a split of the at least one first block into smaller blocks. At 1120, at least one current block of the current image is decoded using a prediction of a partitioning for the at least one current block from at least one part of the stored partitioning information.

It can be seen that two types of partitioning information can be stored: one corresponds to the split modes of the CTU that led to a current CU (split modes successively applied to a block larger than the CU that led to the CU) and one corresponds to the split modes applied to the current CU, for example through the use of a coding mode that splits the CU into sub-CUs (blocks smaller than the CU).

The first type of split modes that led to the current CU can for example comprise quad tree split, binary tree split, or ternary tree split. The second type of split modes that split the CU into smaller blocks can comprise a geometric partitioning mode (GPM), an intra sub-partition mode (ISP), a subblock-transform split mode (SBT) according to which at least one of the subblocks is transformed and another of the subblocks is zeroed-out, a subblock temporal motion vector predictor split mode (SbTMVP). The second type of split mode can also comprise a transform unit split mode splitting a coding unit into transform units (TU), a prediction unit split mode splitting a coding unit into prediction units (PU).

Depending on the variants used, encoding or decoding the current block based on the prediction obtained from the at least one part of the stored partitioning information can comprise determining the partitioning for the at least one current block based on the prediction obtained from the at least one part of the stored partitioning information, and/or encoding/decoding the partitioning for the at least one current block based on the prediction obtained from the at least one part of the stored partitioning information. Further details and variants for encoding/decoding the current block using CU-based (block-based) split partition for temporal partition prediction of the partitioning of the current block are described below in relation with FIG. 12-14.

As explained above, temporal partition prediction relies on information from the signaling of the partitioning tree only which controls the CTU partitioning into multiple CUs. In the variant described here, the CU-based split partition which control how the CUs may be further split into several prediction parts or how the residuals may be further split into several rectangular groups, is also used to temporally predict the CTU partitioning. As explained above, the CU-based split partition can be provided by any coding mode that provides a split of the CU into smaller blocks.

Some examples of CU-based split partition may include geometry partition mode (GPM) split partition, intra sub-partition (ISP), Sub-block Temporal Motion Vector Prediction (SbTMVP) and/or sub-block transform (SBT) partition.

In a variant, when CU-based split partition exits, the value of stored QT depth and/or MTT depth can be incremented by one for the CU in the reference image that is further split. FIG. 12 illustrates an example of use of such variant. FIG. 12 shows a method 1200 for determining partitioning information for a block of a reference image when CU-based split partition exits for the block. This variant relates to the manner the partitioning information stored in the PI buffer are determined, therefore the same process is used at the encoder and the decoder.

For example, the method steps are performed when encoding or decoding the block of the reference image such that all coding data for the block is known at this stage. At 1210, the QT depth and MTT depth of the block is obtained according to the splitting that led to the block. At 1220, it is determined whether the block has been further split into subblocks for encoding. This can be determined by checking the coding mode used for encoding/decoding the block. The coding mode can relate to the prediction mode (e.g. GPM, ISP, SbTMVP), or to the mode for transforming the residuals (e.g. SBT, or split of the block into TUs) or to a split of the block into multiple PUs for prediction. If this is the case, then at 1230, at least one of the QT depth or the MTT depth is incremented.

In a variant, when one or more subblocks of the block are further split into sub-units, the QT or MTT depth assigned to a cell is incremented by a number of splits that led to the sub-units of the block that contain the cell. In a variant, when quad-tree is used to split the block or subblock, the QT depth is incremented, while when binary or ternary tree split-like is used to split the block or subblock, MTT depth is incremented. At 1240, the modified depth (QT or MTT) is stored in the PI buffer.

FIG. 22 illustrates an example of the resulting QT and MTT depth for the CTU (440) of FIG. 4 when applying the method described with FIG. 12. For example, for the CU 2210 that is assumed to be encoded using a geometric partitioning mode, the MTT depth has been increased by 1. For the CU 2220 obtained from an horizontal TT of a CU and which is assumed to be encoded using an ISP mode with a split into 4 sub-units, then the MTT depth is incremented by 2. Other examples and increment values are possible.

The modified depth (QT and MTT) stored in the PI buffer can then be used for determining CTU partitioning of a current image, for example in a similar way as described further above with *JVET-AG0126* by defining average, minimum and maximum QT and MTT depth. For example, the signaling of the CTU split modes can be reduced (and hence the possibility of splitting), or maximum or minimum QT and MTT depth provided by the picture header or in the SPS can be adjusted to offer more possibilities of splitting for example.

According to another embodiment, the stored partition information (CTU-based partition information and/or CU-based partition information) can be used to temporally predict CU-based partition and sub-CU partition.

In this embodiment, it is proposed to use the stored partition info (PI) to predict splitting information of some CU-based partition mode when encoding the partitioning of the CU. This prediction can correspond to an ordering of the most probable splitting modes or to select a cabac context used to encode/decode the splitting syntax element. In some variants, in intra, one may use collocated information in the PI buffer, while in inter one may use the motion vector(s) to pick-up the stored partition information at the shifted position in the PI buffer of the reference picture. In a variant, one may use the motion vector(s) of a neighboring block of the CU.

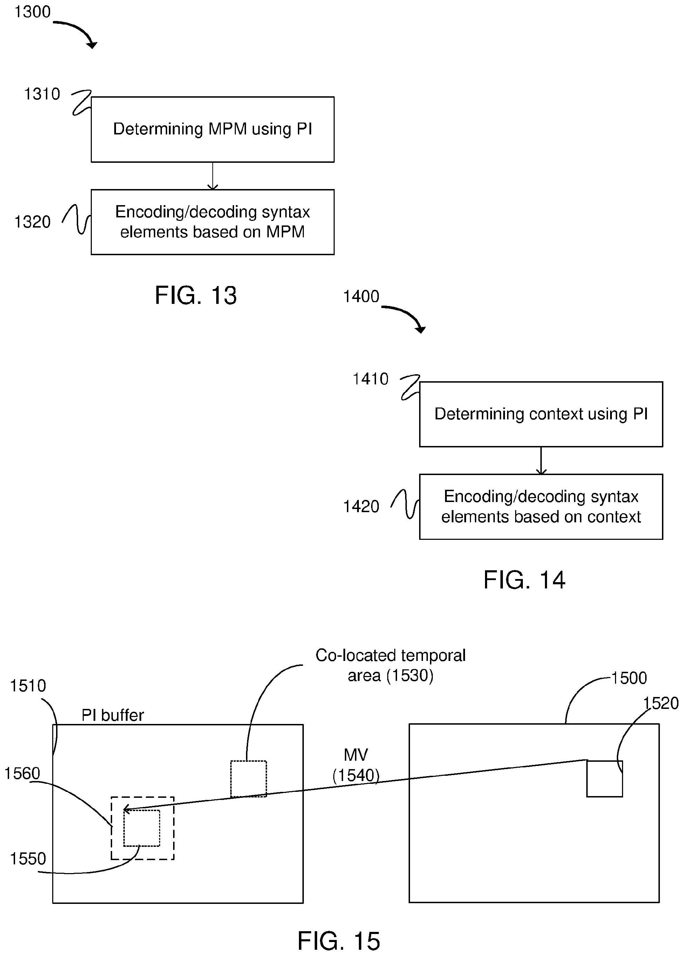

FIG. 14 illustrates an example of a method 1400 for encoding or decoding a partitioning for a block of a current image using partitioning information from a reference image, according to a variant of this embodiment. In this variant, a CABAC context for entropy encoding/decoding one or more syntax elements for the block is selected using the stored PI. At 1410, for a current block to encode/decode, stored partitioning information is obtained for the block from the PI buffer. A context for a context-based arithmetic encoder/decoder is determined for one or more syntax elements signaling the partitioning for the block wherein the context is determined using the obtained stored partitioning information. At 1420, once the CABAC context is determined for the one or more syntax elements, the one or more syntax elements are entropy encoded/decoded using the determined CABAC context.

In an example, this variant can be used for entropy encoding/decoding the syntax element *ispMode* signaling the horizontal or vertical sub-partition of the ISP coding mode for the block.

At 1410, it is determined whether the PI obtained for the block of the current image contains directional vertical or horizontal splitting data. This determination depends on how the PI obtained for the block is stored. For example, it can be determined whether the index value discussed with FIG. 21 indicates a vertical or a horizontal split. In another example, when using the binary mask *splitSeries* mentioned above, it can be determined based on the deepest split mode of the *splitSeries*. In case of using the horizontal and vertical compound depth values, the direction for the block is the direction that provides the highest compound depth.

When several index values are available for the block because it contains cells having distinct index values, a single index value can be obtained for the block by using the index value associated with the highest depth or the index value of a cell that a same or closest depth as the current block. In the same manner for the splitSeries, the value associated with the highest depth is used or the value of a cell that a same or closest depth as the current block.

Or, in case of horizontal and vertical compound depth values, an average horizontal compound depth value and an average vertical compound depth value can be determined.

If the PI indicates directional vertical splitting data, then the CABAC context for encoding/decoding the syntax element *ispMode* can be set to 0, else if PI indicates directional horizontal splitting data then the CABAC context for encoding/decoding the syntax element *ispMode* can be set to 1, else the CABAC context for encoding/decoding the syntax element *ispMode* can be set to 2. Each CABAC context is associated to distinct probability models. In this way, the probability model used for encoding the syntax element can be adapted according to the partitioning information stored in the reference image.

This variant can be extended in a similar manner to any other syntax elements of other coding modes that are used for encoding/decoding the block and that signal a horizontal or vertical splitting of the block.

For example, when the block is encoded/decoded using SBT mode, different CABAC context for entropy encoding/decoding the syntax element *cu_sbt_flag* can be used depending on the PI splitting data obtained for the block. If the PI obtained for the block contains splitting data, then a first CABAC context is used for encoding/decoding the syntax element while if the PI obtained for the block does not contain splitting data then a second CABAC context is used for encoding/decoding the syntax element.

FIG. 13 illustrates an example of a method 1300 for encoding or decoding a partitioning for a block of a current image using partitioning information from a reference image, according to another variant. In this variant, most probable values for the syntax elements signaling a coding mode are provided using the stored PI of the reference image and it is signaled whether the syntax elements signaling the coding mode correspond to the most probable value or not. At 1310, for a current block to encode/decode, stored partitioning information is obtained for the block from the PI buffer. A most probable value for one or more syntax elements signaling the partitioning for the current block is determined using the obtained stored partitioning information. At 1320, the one or more syntax elements are encoded/decoded using the most probable value.

In an example, this variant can be used for encoding/decoding the syntax elements signaling the SBT coding mode (SBT flags mentioned above) when this coding mode is used for encoding/decoding the current block. At 1310, it is determined whether the PI obtained for the current block indicates use of splitting data, such as CU-based splitting data. This determination can be done by considering the depth of split (QT depth, MTT depth, compound depth, splitSeries) obtained for the block from the PI buffer. If the depth is higher than a given value, it is determined that the PI contains splitting data, otherwise not. The given value can be 0, or other value. For example, it can be considered to take into account the depth of the current block, and comparing the depth of current block with the depth obtained from the PI buffer. If the depth obtained from the PI buffer is higher than the depth of the current block, then it is determined that the PI obtained for the block contains splitting data, otherwise not. These are only examples and other conditions can be used instead or in addition.

When several depth values are available for the block because it contains cells having distinct depth values, a single depth value can be obtained for the block by using the highest depth value of the cells, or averaging the depth values associated to the cells.

If the PI indicates use of splitting data, then a most probable value for the syntax element *cu_sbt_flag* can be 1, else it is 0.

In another example, it can be determined whether or not the PI contains vertical or horizontal splitting data. If the PI contains horizontal splitting data, then a most probable value for the syntax element *cu_sbt_horizontal_flag* can be 1 else 0, while if the PI contains vertical splitting data, then the most probable value for the syntax element *cu_sbt_horizontal_flag* can be 0 else 1.

Similarly, in another example one may infer the most probable value(s) of the splitting directions in case the current block is encoded/decoded using GPM. For example, if the PI obtained for the current block contains a splitting direction other than horizontal or vertical, the closest splitting line (defined by angle and offset FIG. 6) of the GPM mode is set as the most probable splitting line. Then, a syntax element is signaled indicating of the splitting line of the GMP mode is the most probable value or not and if this is not the case, an index is signaled to indicate the splitting line. In a variant, the set of the possible GPM splitting lines is re-ordered depending on their closeness with the splitting direction stored in the PI.

In the variants described above, the PI obtained for the current block from the PI buffer can be obtained from a temporal area in the PI buffer co-located with the current block.

In another variant, this can be adapted depending on whether the current block is encoded using an intra mode or an inter mode. Advantageously, as depicted in FIG. 15, the temporal area in the PI buffer (1510) used for deriving of the PI of the current block (1520) may not be limited to the collocated area (1530) in one co-located reference picture, but in case of inter-prediction of the current block, one may use motion vector(s) information (1540) and PI (1510) of the reference picture(s) to select the temporal area in the PI buffer (1510) associated with the reference picture(s). For example, motion vector information (MV) may be obtained from one of the co-located MI buffer, one decoded spatial candidate (ex: similarily as in FIG. 9) or from a MV of the current block if it has been decoded yet.

This temporal area may be not limited to the current block size (1550) but may encompass a larger area (1560) around it.

In some video codecs different from VVC or ECM (ex: HEVC), some splitting of coding units may consist in a recursive partitioning of a coding unit into transform units, also called transform tree. That is, all transform units belonging to a same CU typically share same coding mode information and possibly same prediction information also. The splitting of a CU into TU then involves the encoding/decoding of each TU by applying transform, quantization and entropy coding of quantized coefficients successively for each TU in the considered CU. Such transform split of CUs is supported in former HEVC video standard and is explicitly signaled in the bit-stream. This transform split into TUs may well exist in a future video standard beyond VVC. This variant provides for extending the embodiments described herein to the transform unit splitting information. The transform unit splitting information can be stored in the PI buffer for a reference picture. The PI stored in the PI buffer for a reference picture may be used for predicting the transform unit splitting information used for encoding/decoding a block of a current image having this reference picture as co-located reference picture whether or not TU splitting information is stored in the PI buffer.

In some video codecs different from VVC or ECM, some splitting of coding units may consist in a partitioning of a coding unit into so-called prediction units (PUs). That is, all prediction units belonging to a same CU typically share same coding mode (intra, inter, intra block copy) information. But each PU carries its own prediction parameters (e.g. motion data). Typically, the splitting of a CU into PU may be symmetric binary, asymmetric binary, quaternary. Such PU split of CUs is supported in former HEVC video standard and is explicitly signaled in the bit-stream. It may well exist in a future video standard beyond VVC. This variant provides for extending the embodiments described herein to the prediction unit splitting information. The prediction unit splitting information can be stored in the PI buffer for a reference picture. The PI stored in the PI buffer of a reference picture can be used for predicting the prediction unit splitting information used for encoding/decoding a block of a current image having this reference picture as co-located reference picture, whether or not PU splitting information is stored in the PI buffer.

In an embodiment, illustrated in FIG. 16, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 17 shows an example of the syntax of a signal transmitted over a packet-based transmission protocol. Each transmitted packet P comprises a header H and a payload PAYLOAD. In some embodiments, the payload PAYLOAD may comprise data representative of a video encoded according to any one of the embodiments described above. The payload can also comprise any signaling as described above.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding.

Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

    a. SDP (session description protocol), a format for describing multimedia communication sessions for the purposes of session announcement and session invitation, for example as described in RFCs and used in conjunction with RTP (Real-time Transport Protocol) transmission.
    b. DASH MPD (Media Presentation Description) Descriptors, for example as used in DASH and transmitted over HTTP, a Descriptor is associated to a Representation or collection of Representations to provide additional characteristic to the content Representation.
    c. RTP header extensions, for example as used during RTP streaming.
    d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described herein. Features of these embodiments can be provided alone or in any combination, across various claim categories and types.

## Claims

1. A method, comprising:

   storing partitioning information for at least one first block of a reference image of a current image, the partitioning information comprising at least an information representative of a first split mode splitting the at least one first block into smaller blocks,
   decoding at least one current block of the current image using a prediction of a partitioning for the at least one current block from at least one part of the stored partitioning information.

2. An apparatus comprising one or more processors operable to

   store partitioning information for at least one first block of a reference image of a current image, the partitioning information comprising at least an information representative of a first split mode splitting the at least one first block into smaller blocks,
   decode at least one current block of the current image using a prediction of a partitioning for the at least one current block from at least one part of the stored partitioning information.

3. The method of claim 1, wherein decoding at least one current block comprises at least one of:

   - determining the partitioning for the at least one current block based on the prediction obtained from the at least one part of the stored partitioning information, or
   - decoding the partitioning for the at least one current block based on the prediction obtained from the at least one part of the stored partitioning information.

4. The method of claim 3, wherein decoding the partitioning for the at least one current block based on the prediction obtained from the at least one part of the stored partitioning information comprises:

   - determining a most probable value for one or more syntax elements signaling the partitioning for the at least one current block using the at least one part of the stored partitioning information,
   - decoding the one or more syntax elements using the most probable value.

5. The method of claim 3, wherein decoding the partitioning for the at least one current block based on the prediction obtained from the at least one part of the stored partitioning information comprises:

   - determining a context for a context-based arithmetic decoder for one or more syntax elements signaling the partitioning for the at least one current block, the context being determined using the at least one part of the stored partitioning information,
   - decoding the one or more syntax elements using the determined context.

6. The method of any one of claims 1, or 3-5, wherein the partitioning information comprises an information representative of a direction of a split line partitioning the at least one first block into smaller blocks or used for obtaining the at least one first block from a larger block.

7. The method of claim 6, wherein the information representative of a direction of a split line is an index value indicating at least one of a horizontal split, a vertical split or a split in a direction defined by a given angle distinct from vertical or horizontal.

8. The method of any one of claims 1, or 3-7, wherein the at least an information representative of a first split mode splitting the at least one first block into smaller blocks is comprised in an index value that also comprises an indication representative of at least one second split mode applied to a larger block at a given depth of the larger block partitioning that led to the at least one first block.

9. The method of any one claims 1, or 3-8, wherein the partitioning for the current block comprises at least one of one or more second split modes successively applied to a larger block that led to the current block or one or more first split modes applied to the current block that split the current block into smaller blocks.

10. The method of claim 8 or 9, wherein the at least one second split mode comprises at least one of a quad tree split, a binary tree split, a ternary tree split or no split.

11. The method of claim 1 or 9, wherein the at least one first split mode comprises at least one of a geometric partitioning mode, an intra sub-partitioning mode, a subblock-transform split mode according to which at least one of the subblocks is transformed and another of the subblocks is zeroed-out, a subblock temporal motion vector predictor split mode, a transform unit split mode splitting a coding unit into transform units, a prediction unit split mode splitting a coding unit into prediction units.

12. The method of any one of claims 1, 6 or 7--11, wherein the information is stored in a partition buffer for each block at a given resolution of the reference image, the given resolution being at least one of one sample, 4x4 samples, 8x8 samples or 16x16 samples.

13. The method of any one of claims 1, or 3 to 12, wherein storing partitioning information for at least one first block of a reference image of a current image comprises:

- obtaining at least one depth of a second split mode that led to the at least one first block of the reference image,
- responsive to a determination that the at least one first block is coded using a coding mode that applies a first split mode partitioning the at least one first block into smaller blocks, incrementing the at least one depth of the second split mode by at least one,
- storing the at least one depth of the second split mode in the partitioning information.

14. The method of any one of claims 1, or 3 to 13, wherein the prediction of a partitioning for the at least one current block from at least one part of the stored partitioning information is determined using an area in the reference image that is collocated with the at least one current block or that is a motion-compensated area in the reference image obtained using a motion vector of the at least one current block or of a neighboring block of the current block.

15. The method of any one of claims 1, or 3 to 14, wherein the partitioning information comprises a compound depth determined for the at least one first block that is representative of a size of the at least one first block.

16. The method of claim 15, wherein the compound depth is determined recursively to the at least one first block depending on one or more second split modes applied to one or more larger blocks that led to the at least one first block and wherein a value used to increment the compound depth at a given level depends on a type of the second split modes.

17. The method of claim 15 or 16, wherein the compound depth is determined for the at least one first block further depending on one or more first split modes applied to the at least one first block that split the at least one first block into smaller blocks and wherein a value used to increment the compound depth at a given level depends on a type of the first split modes.

18. The method of any one of claims 15-17, wherein the compound depth comprises a compound depth value per horizontal and vertical directions.

100A

110                          120

| Processor |          | Memory |

115

FIG. 1A

100B

105

110          120          160

RF

COMP          Processor          Memory          Display Interface

USB          170

HDMI          115          Audio Interface

180

Communication
Interface          150          Peripheral
Interface

Communication Channel

190

FIG. 1B

FIG. 1C

FIG. 2

300

| 330 | 335 | 340 | 350 |
|---|---|---|---|
| Entropy Decoding | Partitioning | Inverse Quantization | Inverse Transform |

355

Prediction Mode — 370

Intra Prediction

360

375 — Motion Compensation

372 — Motion Refinement

380

Reference Picture Buffer

365 — In-loop Filters

385

Post-decoding Processing

# FIG. 3

400

410 Quad split

420 Binary split

430 Ternary split

440

## FIG. 4

Splitting depth

QS — 0

QS — TS — x — TS — 1

x — QS — BS — BS — x — BS — x — x — x — x — 2

x x x — x x x — x — TS — 3

— 4

500

## FIG. 5

FIG. 6

(a)

(b)

FIG. 7

FIG. 8

FIG. 9

1000

1010

Storing PI of reference image

1020 Encoding a block of the current
image using PI

FIG. 10

1100

1110

Storing PI of reference image

1120 Decoding a block of the
current image using PI

FIG. 11

1200

1210 Obtaining depth value for
recursive splitting to obtain first
block

1220 First block further split ?

yes

1230

no

Update depth value
for first block or
subblocks of first
block

Store depth value for first block
or subblocks of first block

1240

FIG. 12

1300

1310 — Determining MPM using PI

1320 — Encoding/decoding syntax elements based on MPM

**FIG. 13**

1400

1410 — Determining context using PI

1420 — Encoding/decoding syntax elements based on context

**FIG. 14**

Co-located temporal area (1530)

1510

1500

1520

PI buffer

1560

MV (1540)

1550

**FIG. 15**

FIG. 16

FIG. 17

FIG. 18

0+2+2+2=6

0+2+2=4

0+2+2+1=5

0+2+2+1=5

0+2+2+1=5

0+2+2+1=5

0+2+2=4

0+2+1+1=4

0+2+2=4

0+2+1+1+2=6

0+2+1+1+1=5

0+2+1+1+2=6

0+2=2

0+2+2=4

0+2+1=3

0+2+2=4

V 0+2+2+2=6
H 0+2+2+2=6

FIG. 19

V 0+2+2=4
H 0+2+2=4

V 0+2+2=4
H 0+2+2+1=5

V 0+2+2=4
H 0+2+2+1=5

V 0+2+2+1=5
H 0+2+2=4

V 0+2+2+1=5
H 0+2+2=4

V 0+2+2=4
H 0+2+2=2

V 0+2+2=4
H 0+2+2=2

V 0+2+1=3
H 0+2+1=3

V 0+2+2=4
H 0+2=2

V 0+2+1+2=5
H 0+2+1=3

V 0+2=2
H 0+2+2=4

V 0+2+1+1=4
H 0+2+1=3

Vertical (V) 0+2=2
Horizontal (H) 0+2=2

V 0+2=2
H 0+2+1=3

V 0+2=2
H 0+2+2=4

FIG. 20

FIG. 21

FIG. 22

Europäisches Patentamt

European Patent Office

Office européen des brevets

**EUROPEAN SEARCH REPORT**

**Application Number**

EP 24 30 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAROCHE (CANON) G ET AL: "AhG12: On ECM temporal partitioning prediction", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0126 10 January 2024 (2024-01-10), XP030314042, Retrieved from the Internet: URL:https://jvet-experts.org/doc_end_user/documents/33_Teleconference/ar/m66022-ar2-JVET-AG0126_v2.zip JVET-AG0126_v2/JVET-AG0126_v2.docx [retrieved on 2024-01-19] | 1-5,7, 10,12-18 | INV. H04N19/119 H04N19/147 H04N19/176 H04N19/463 H04N19/70 H04N19/91 H04N19/96 |
| Y | * the whole document * ----- | 6,8,9,11 | |
| Y | "Test model 20 for versatile video coding (VTM 20)", 142. MPEG MEETING; 20230424 - 20230428; ANTALYA; (MOTION PICTURE EXPERT GROUP OR ISO/IEC JTC1/SC29/WG11), , no. n22708 2 August 2023 (2023-08-02), XP030311884, Retrieved from the Internet: URL:https://dms.mpeg.expert/doc_end_user/documents/142_Antalya/wg11/MDS22708_WG05_N00204.zip WG5_N0204_JVET-AD2002-v1-VTM20.docx [retrieved on 2023-08-02] * page 57 - page 120 * ----- | 6,8,9,11 | **TECHNICAL FIELDS SEARCHED (IPC)** H04N |

-/--

The present search report has been drawn up for all claims

| Place of search | Date of completion of the search | Examiner |
|---|---|---|
| Munich | 17 July 2024 | Cyranka, Oliver |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 5492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAROCHE (CANON) G ET AL: "AhG12: On ECM partitioning prediction", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0130 ; m62773 14 April 2023 (2023-04-14), XP030308799, Retrieved from the Internet: URL:https://jvet-experts.org/doc_end_user/documents/30_Antalya/wg11/JVET-AD0130-v1.zip JVET-AD0130_v1/JVET-AD0130.docx [retrieved on 2023-04-14] * the whole document * ----- | 1,2 | |

TECHNICAL FIELDS
SEARCHED (IPC)

The present search report has been drawn up for all claims

| Place of search | Date of completion of the search | Examiner |
|---|---|---|
| Munich | 17 July 2024 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. COBAN,** ; **R.-L. LIAO** ; **K. NASER** ; **J. STRÖM** ; **L. ZHANG,**. Algorithm description of Enhanced Compression Model 10 (ECM 10). *JVET-AE2025*, 20 October 2023, vol. 13

- **G. LAROCHE** ; **P. ONNO,**. AhG12: On ECM Temporal partitioning prediction,. *JVET AG0126*, 26 January 2024, vol. 17
- **J. PARK** ; **B. JEON**. Non-CE6 : Simplified SBT mode coding,. *JVET-P0216*, 01 October 2019